# EUROPEAN PATENT SPECIFICATION

(11) **EP 4 243 177 B1**
(45) Date of publication and mention of the grant of the patent: **13.05.2026**
(21) Application number: 22837986.3
(22) Date of filing: 06.07.2022
(51) Int. Cl.: H01M 50/342, H01M 50/392, H01M 50/184, H01M 50/186, H01M 50/178

(54) **BATTERY CELL AND BATTERY MODULE COMPRISING SAME**
BATTERIEZELLE UND BATTERIEMODUL DAMIT
ÉLÉMENT DE BATTERIE ET MODULE DE BATTERIE LE COMPRENANT

(30) Priority: 06.07.2021 KR 20210088729; 04.07.2022 KR 20220081995
(43) Date of publication of application: 13.09.2023
(73) Proprietor: LG Energy Solution, Ltd., Seoul 07335 (KR)
(72) Inventor: SONG, Dae-Woong, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR); LIM, Hun-Hee, Daejeon 34122 (KR); HWANG, Soo-Ji, Daejeon 34122 (KR)
(74) Representative: Plasseraud IP
(86) International application number: PCT/KR2022/009789
(87) International publication number: WO 2023/282634

(56) References cited:
- KR-A- 20090 065 587
- KR-A- 20130 065 288
- KR-B1- 101 520 148
- KR-B1- 101 531 271
- KR-B1- 101 904 587

## Description

### TECHNICAL FIELD

The present disclosure relates to a battery cell and a battery module including the same, and more particularly, to a battery cell improved in insulating performance and gas discharge performance.

### BACKGROUND ART

As technology development and demand for mobile devices increase, the demand for secondary batteries as an energy source is rapidly increasing. In particular, secondary batteries are of great interest as energy sources not only for mobile devices such as mobile phones, digital cameras, notebooks and wearable devices, but also for power devices such as electric bicycles, electric vehicles and hybrid electric vehicles.

Depending on the shape of a battery case, these secondary batteries are classified into a cylindrical battery and a prismatic battery in which an electrode assembly is included in a cylindrical or prismatic metal can, and a pouch-type battery in which the electrode assembly is included in a pouch-type case of an aluminum laminate sheet. Here, the electrode assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

Among them, in particular, a pouch-type battery in which a stack-type or stack/folding-type electrode assembly is included in a pouch-type battery case made of an aluminum laminate sheet is being used more and more due to low manufacturing cost, small weight, and easy modification.

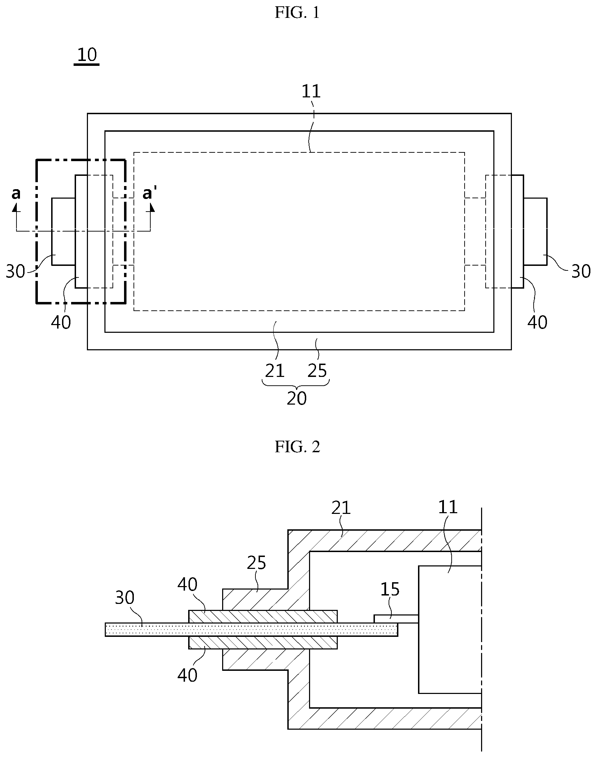

FIG. 1 is a top view showing a conventional battery cell. FIG. 2 is a cross-sectional view, taken along the axis a-a' of FIG. 1.

Referring to FIGS. 1 and 2, a conventional battery cell 10 includes a battery case 20 having an accommodation portion 21 in which an electrode assembly 11 is mounted, and a sealing portion 25 formed by sealing an outer periphery thereof. In addition, the battery cell 10 includes an electrode lead 30 electrically connected to an electrode tab 15 included in the electrode assembly 11 and protruding out of the battery case 20 via the sealing portion 25, and a lead film 40 is located between upper and lower portions of the electrode lead 30 and the sealing portion 25.

However, as the energy density of the battery cell increases in recent years, there is a problem that the amount of gas generated inside the battery cell also increases. In the case of the conventional battery cell 10, a component capable of discharging the gas generated inside the battery cell is not included, so a venting may occur to burst the battery case 20 due to gas generation in long-term storage. In addition, moisture may penetrate into the battery cell damaged by the venting, which may cause side reactions, and there is a problem that battery performance deteriorates and additional gas is generated. Accordingly, there is an increasing need to develop a battery cell with improved external emission of gas generated inside the battery cell.

Documents KR 101 904 587 B1, KR 2013/0065288 A, KN 101 531 271 B1, KR 101 520 148 B1 and KR 2009/0065587 A are about venting gas from battery cells.

### DISCLOSURE

### Technical Problem

The present disclosure is directed to providing a battery cell improved in insulating performance and gas discharge performance, and a battery module including the same.

The object to be solved by the present disclosure is not limited to the above-mentioned object, and the objects not mentioned here may be clearly understood by those skilled in the art from this specification and the accompanying drawings.

### Technical Solution

To this end, the invention relates to a battery cell according to claim 1.

The battery cell according to the invention may present one or more features of dependent claims 2 to 15.

### Advantageous Effects

According to the embodiments, the present disclosure provides a battery cell including a sealing portion from which the battery case extends, and a cover portion positioned on a lead film, and a battery module including the same, so that insulation performance and gas discharge performance may be improved.

Specifically, according to one aspect of the present disclosure, a gas discharge path may be formed at the interface between the gas discharge guiding unit and the lead film, so that the gas in the battery cell may be effectively discharged to the outside, while securing a relatively easy manufacturing process.

According to another aspect of the present disclosure, since the cover portion may be located outer than the end of the lead film, the insulating performance for the end surface of the end of the cover portion may be improved. Even when a crack occurs in the gas discharge path due to the increase in the internal pressure of the battery case, the end surface of the end of the cover portion is located outer than the gas discharge path and thus may not come into contact with the electrolyte leaking to the outside of the gas discharge path, and accordingly the insulation performance may also be improved.

According to another aspect of the present disclosure, by adjusting the shape of the gas discharge guiding unit, it is possible to control the gas discharge performance of the gas discharge guiding unit and durability and airtightness of the lead film. In addition, if necessary, by changing the shape of the gas discharge guiding unit, it is possible to simplify the manufacturing process and reduce the cost.

According to another aspect of the present disclosure, by setting the gas permeability and moisture penetration amount of the lead film within a predetermined range, it may be more effective to prevent moisture penetration from the outside while discharging the gas generated inside the battery cell.

The effect of the present disclosure is not limited to the above effects, and the effects not mentioned here will be clearly understood by those skilled in the art from this specification and the accompanying drawings.

### DESCRIPTION OF DRAWINGS

FIG. 1 is a top view showing a conventional battery cell.
FIG. 2 is a cross-sectional view, taken along the axis a-a' of FIG. 1.
FIG. 3 is a top view showing a battery cell according to an embodiment of the present disclosure.
FIG. 4 is an enlarged view showing a two-dot chain line region of FIG. 3.
FIG. 5 is a cross-sectional view, taken along the axis A-A' of FIG. 3.
FIG. 6 shows various shapes of a gas discharge guiding unit.
FIG. 7 is an enlarged view showing a two-dot chain line region of FIG. 5.
FIG. 8 is a diagram showing a gas discharge path formed at an interface between a lead film and the gas discharge guiding unit of FIG. 7.
FIG. 9 is a diagram showing that an electrolyte leaks due to a crack generated in a part of the gas discharge path of FIG. 8.
FIG. 10 is a cross-sectional view showing a battery cell according to another embodiment of the present disclosure, taken along the axis A-A' of FIG. 3.
FIG. 11 is an enlarged view showing a two-dot chain line region of FIG. 10.
FIG. 12 is a diagram showing a gas discharge path formed at the interface between the lead film and the gas discharge guiding unit of FIG. 11.
FIG. 13 is a diagram showing that an electrolyte leaks due to a crack generated in a part of the gas discharge path of FIG. 12.
FIG. 14 is a cross-sectional view, taken along the a-a' axis of FIG. 1 according to a comparative example.
FIG. 15 is an enlarged view showing the two-dot chain line region of FIG. 14 and showing that an electrolyte leaks due to a crack generated in a part of the gas discharge path of FIG. 14.

### BEST MODE

Hereinafter, with reference to the accompanying drawings, various embodiments of the present disclosure will be described in detail so as to be easily implemented by those skilled in the art. The present disclosure may be implemented in various different forms and is not limited to the embodiments described herein.

In order to clearly explain the present disclosure, parts irrelevant to the description are omitted, and identical or similar components are endowed with the same reference signs throughout the specification.

In addition, since the size and thickness of each component shown in the drawings are arbitrarily expressed for convenience of description, the present disclosure is not necessarily limited to the drawings. In order to clearly express various layers and regions in the drawings, the thicknesses are enlarged. Also, in the drawings, for convenience of explanation, the thickness of some layers and regions is exaggerated.

In addition, throughout the specification, when a part "includes" a certain component, it means that other components may be further included, rather than excluding other components, unless otherwise stated.

In addition, throughout the specification, when referring to "top view", it means that the target part is viewed from above, and when referring to "cross-sectional view", it means that a vertically-cut section of the target part is viewed from a side.

Hereinafter, a battery cell according to an embodiment of the present disclosure will be described. However, here, the description will be made based on one end of the battery cell, but it is not necessarily limited thereto, and the same or similar contents may be described in the case of the other end of the battery cell.

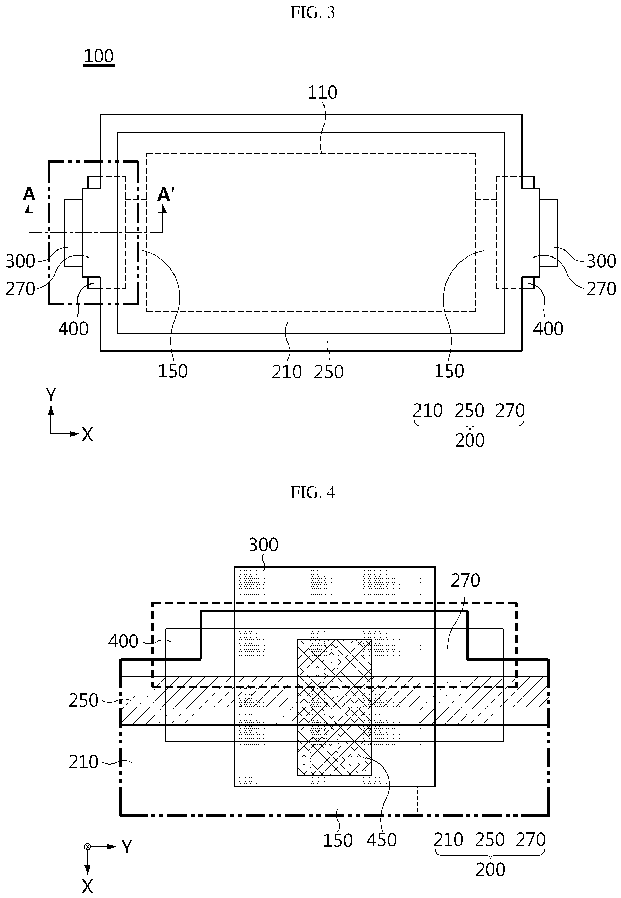

FIG. 3 is a top view showing a battery cell according to an embodiment of the present disclosure.

The battery cell 100 according to an embodiment of the present disclosure includes a battery case 200 having an accommodation portion 210 in which an electrode assembly 110 is mounted, and a sealing portion 250 formed by sealing an outer periphery thereof; an electrode lead 300 electrically connected to an electrode tab 150 included in the electrode assembly 110 and protruding out of the battery case 200 via the sealing portion 250; and a lead film 400 located at a portion corresponding to the sealing portion 250 in at least one of an upper portion and a lower portion of the electrode lead 300. For example, the battery cell 100 has a long side in a direction along the X-axis and a short side in a direction along the Y-axis, and also has a small thickness in the Z-axis direction compared to the length of the X-axis or Y-axis, so that it may be an approximately rectangular plate-shaped cell. The electrode lead 300 may be formed at the short side of the battery cell 100. Such battery cells 100 are integrated in the Z-axis direction to stack several battery cells 100 face-to-face, which is an efficient structure to increase energy density.

The electrode assembly 110 may have a structure of a jelly-roll type (winding type), a stack type (lamination type), or a composite type (stack/folding type). More specifically, the electrode assembly 110 may include a positive electrode, a negative electrode, and a separator disposed therebetween.

The electrode lead 300 is electrically connected to an electrode tab 150 included in the electrode assembly 110, and protrudes out of the battery case 200 via the sealing portion 250. In addition, the lead film 400 is located at a portion corresponding to the sealing portion 250 in at least one of an upper portion and a lower portion of the electrode lead 300. Accordingly, the lead film 400 may improve the sealing properties of the sealing portion 250 and the electrode lead 300 while preventing a short circuit from occurring in the electrode lead 300 during thermal fusion or press fusion together with the sealing portion 250.

Referring to FIG. 3, the lead film 400 may have a wider width than the electrode lead 300. Here, the width of the lead film 400 means a maximum value of the distance between one end and the other end of the lead film 400 in a direction (Y-axis direction) orthogonal to the protruding direction (X-axis direction) of the electrode lead 300, and the width of the electrode lead 300 means a maximum value of the distance between one end and the other end of the electrode lead 300 in a direction orthogonal to the protruding direction of the electrode lead 300.

The lead film 400 may have a length greater than the length of the sealing portion 250 based on the protruding direction of the electrode lead 300 and have a length smaller than the length of the electrode lead 300. Here, the length of the lead film 400 means a maximum value of the distance between one end and the other end of the lead film 400 in the protruding direction of the electrode lead 300. The length of the sealing portion 250 means a maximum value of the distance between one end and the other end of the sealing portion 250 in the protruding direction of the electrode lead 300. The length of the electrode lead 300 means a maximum value of the distance between one end and the other end of the electrode lead 300 in the protruding direction of the electrode lead 300. Accordingly, the lead film 400 may prevent the side surface of the electrode lead 300 from being exposed to the outside without interfering with the electrical connection of the electrode lead 300.

The battery case 200 may be a laminate sheet including a resin layer and a metal layer. More specifically, the battery case 200 may be made of a laminate sheet, and may include an outer resin layer forming the outermost layer, a barrier metal layer preventing penetration of materials, and an inner resin layer for sealing. For example, the barrier metal layer may be made of an aluminum material.

Here, the battery case 200 may be manufactured by cutting the laminate sheet according to a predetermined shape, and at the edges of the battery case 200, the end surfaces of the outer resin layer, the barrier metal layer, and the inner resin layer may be exposed to the outside. Here, the cutting method may employ laser cutting, knife cutting, mold punching, and the like, but the present invention is not limited thereto, and a cutting method generally applied when cutting a laminate sheet may also be included in this embodiment.

However, in the battery case 200, when the barrier metal layer exposed at the edge of the battery case 200 comes into contact with an external material or electrolyte, this may form an electric circuit and lead to a fire. Accordingly, in this embodiment, it is needed to secure insulation for the barrier metal layer exposed at the edge of the battery case 200.

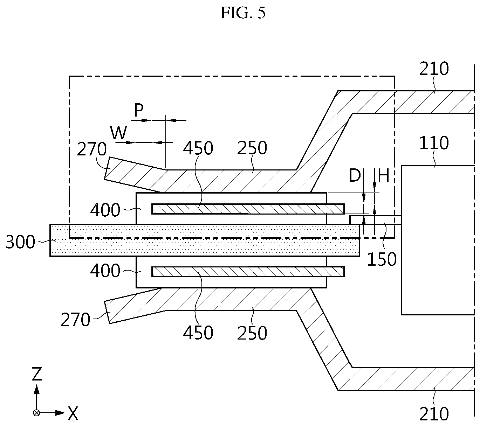

FIG. 4 is an enlarged view showing a two-dot chain line region of FIG. 3. FIG. 5 is a cross-sectional view, taken along the axis A-A' of FIG. 3.

Referring to FIGS. 4 and 5, in this embodiment, the gas discharge guiding unit 450 may be inserted into the lead film 400, and the battery case 200 may include a cover portion 270 extending from the sealing portion 250.

Here, the sealing portion 250 and the cover portion 270 may be integrated with each other. More specifically, as the accommodation portion 210 and the cover portion 270 are thermally fused or press-fused in the battery case 200, the sealing portion 250 may be formed between the accommodation portion 210 and the cover portion 270.

In addition, the cover portion 270 may extend from the sealing portion 250 and may protrude in the outer direction of the battery case 200. More specifically, the cover portion 270 may extend from the sealing portion 250 positioned on the lead film 400. That is, the cover portion 270 may be positioned on the lead film 400. Here, based on the sealing portion 250, the cover portion 270 may extend in the same direction as the direction in which the lead film 400 protrudes in the outer direction of the battery case 200.

Also, the cover portion 270 may be positioned on the gas discharge guiding unit 450. More specifically, the cover portion 270 may be positioned on the gas discharge guiding unit 450 with the lead film 400 interposed therebetween. In other words, the cover portion 270 may be located in a portion corresponding to the portion of the lead film 400 where the gas discharge guiding unit 450 is located. That is, the cover portion 270 may cover a portion of the lead film 400 where the gas discharge guiding unit 450 is located. When the battery case 200 is cut, the battery case 200 may be cut so that the cover portion 270 is longer in the X-axis direction than the sealing portion 250, thereby providing the cover portion 270 capable of covering the portion where the gas discharge guiding unit 450 is located.

For example, the gas discharge guiding unit 450 may be located in a portion corresponding to the center of the cover portion 270. In other words, the center line of the gas discharge guiding unit 450 and the center line of the cover portion 270 may coincide with each other.

According to this configuration, in this embodiment, since the cover portion 270 may be located on the gas discharge guiding unit 450 of the lead film 400, the cover portion 270 may cove a portion of the gas discharge paths formed by the lead film 400 and the gas discharge guiding unit 450, which is exposed to the outside of the battery case 200. **In** other words, the cut surface of the battery case 200 may cover the gas discharge path.

Referring to FIG. 4, based on a direction perpendicular to the protruding direction of the electrode lead 300, the length of the cover portion 270 may be identical to or greater than the length of the gas discharge guiding unit 450. Here, the length of the cover portion 270 means a maximum value of the distance between one end and the other end of the cover portion 270 in a direction orthogonal to the protruding direction of the electrode lead 300. The length of the gas discharge guiding unit 450 means a maximum value of the distance between one end and the other end of the gas discharge guiding unit 450 in a direction orthogonal to the protruding direction of the electrode lead 300.

Accordingly, the cover portion 270 may cover the entire portion of the gas discharge guiding unit 450 positioned outside the battery case 200 in the lead film 400. That is, it is possible to effectively cover the entire portion of the gas discharge path formed by the lead film 400 and the gas discharge guiding unit 450, which is exposed to the outside of the battery case 200.

For example, based on a direction perpendicular to the protruding direction of the electrode lead 300, the length of the cover portion 270 may be identical to or smaller than the length of the lead film 400. Here, the length of the lead film 400 means a maximum value of the distance between one end and the other end of the lead film 400 in a direction orthogonal to the protruding direction of the electrode lead 300. That is, the cover portion 270 may cover a part or the entirety of a portion where the lead film 400 is positioned.

According to the above configuration, in this embodiment, since the cover portion 270 may have a size similar to that of the lead film 400, it is possible to effectively cover the portion where the gas discharge guiding unit 450 is located, while increasing the space efficiency of the battery cell 100.

However, the size of the cover portion 270 is not limited thereto, and any size may be included in this embodiment as long as the portion where the gas discharge guiding unit 450 is located can be covered as described above.

Referring to FIGS. 4 and 5, the end of the cover portion 270 may be located outer than the end of the lead film 400 based on the protruding direction of the electrode lead 300. In other words, the end of the cover portion 270 may extend from the sealing portion 250, and may extend outer than the end of the lead film 400.

More specifically, the cover portion 270 may be bent in a direction away from the lead film 400 (Z-axis direction) with respect to the sealing portion 250. Here, the angle at which the cover portion 270 is bent with respect to the sealing portion 250 may be an angle generated as the sealing portion 250 is fused. However, the angle at which the cover portion 270 is bent with respect to the sealing portion 250 may be adjusted to be smaller or larger than the angle generated as the sealing portion 250 is fused, if necessary.

Accordingly, in this embodiment, the cover portion 270 may be located outer than the end of the lead film 400, thereby improving the insulating performance of the end surface of the end of the cover portion 270. That is, even when a crack occurs in the gas discharge path according to the increase in the internal pressure of the battery case 200, the end surface of the end of the cover portion 270 may not come into contact with the electrolyte leaking to the outside of the gas discharge path since it is located outer than the gas discharge path, and thus the insulating performance may also be improved. In other words, by cutting the battery case 200 in a portion of the gas discharge path long, the cut surface of the battery case 200 sufficiently covers the gas discharge path, so even if electrolyte leaks, the barrier metal layer exposed to the cut surface of the battery case 200 does not come into contact with the leaked electrolyte. Thus, an electric circuit is not formed, and the insulating performance may be maintained.

Also, the end of the electrode lead 300 may be located outer than the end of the cover portion 270 based on the protruding direction of the electrode lead 300. In other words, the end of the cover portion 270 may extend from the sealing portion 250 and may extend shorter than the end of the electrode lead 300.

Accordingly, in this embodiment, since the end of the electrode lead 300 is located outer than the end of the cover portion 270, the cover portion 270 may improve the insulating performance while not interfering with the electrical connection between the electrode lead 300 and other components.

Referring to FIGS. 4 and 5, the gas discharge guiding unit 450 may extend along the protruding direction of the electrode lead 300. More specifically, in the gas discharge guiding unit 450, an end of the gas discharge guiding unit 450 adjacent to the outer side of the battery case 200 may be surrounded with the lead film 400. In other words, the end of the gas discharge guiding unit 450 adjacent to the outer side of the battery case 200 may not be exposed out of the battery case 200.

In addition, an end of the gas discharge guiding unit 450 adjacent to the inner side of the battery case 200 may be exposed inside the battery case 200. In other words, the end of the gas discharge guiding unit 450 adjacent to the inner side of the battery case 200 may be located on the same vertical line as the end of the lead film 400, or may be located at the inner side the battery case 200 compared to the end of the lead film 400.

Accordingly, in the lead film 400, since one end of the gas discharge guiding unit 450 adjacent to the outer side of the battery case 200 is not exposed out of the battery case 200, the sealing force of the battery case 200 by the lead film 400 and the sealing portion 250 may be improved. In addition, in the lead film 400, since the end of the gas discharge guiding unit 450 adjacent to the inner side of the battery case 200 is exposed inside the battery case 200, the gas generated in the battery cell 100 may be easily introduced along the gas discharge path formed by the gas discharge guiding unit 450 and may be effectively discharged to the outside.

Referring to FIG. 5 further, the thickness H (height in the Z-axis directions) of the lead film 400 on the upper surface of the gas discharge guiding unit 450 may be 100 µm to 300 µm, or 100 µm to 200 µm. When the thickness H of the lead film 400 satisfies the above range, the gas inside the battery case 200 may be more easily discharged to the outside.

Also, referring to FIG. 5, based on the protruding direction of the electrode lead 300, the width W of the lead film 400 surrounding the front surface of the gas discharge guiding unit 450 may be 2 mm or more, or 2 mm to 3 mm. When the width W of the lead film 400 satisfies the above range, the lead film 400 may not be torn as much as possible while the gas generated inside the battery case 200 is discharged to the outside.

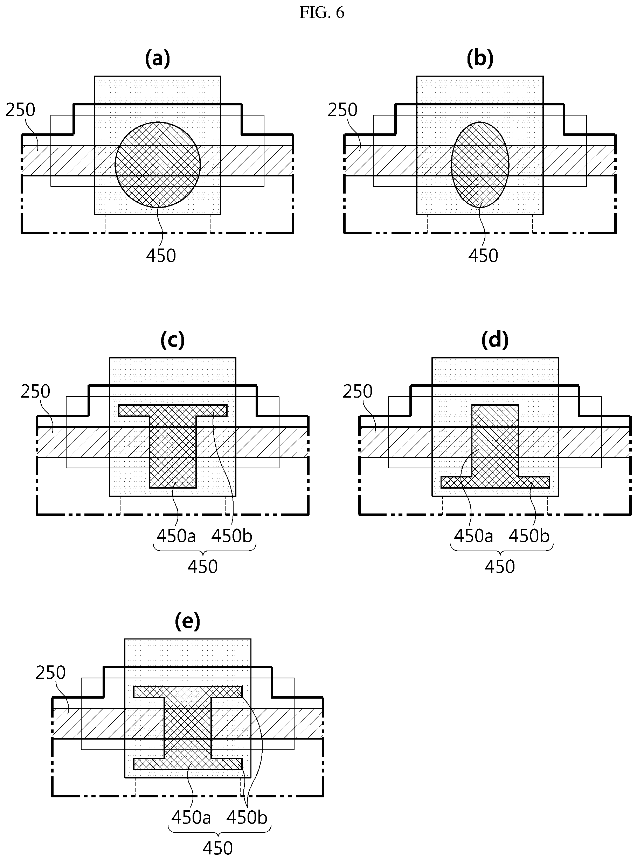

In addition, the gas discharge guiding unit 450 may have a thickness D of 50 µm to 150 µm. When the thickness of the gas discharge guiding unit 450 satisfies the above range, the gas inside the battery case 200 may be more easily discharged to the outside. FIG. 6 shows various shapes of the gas discharge guiding unit. The gas discharge guiding unit 450 may be formed in a predetermined pattern to discharge gas inside the battery case 200.

For example, the gas discharge guiding unit 450 may have a rectangular shape extending along the protruding direction of the electrode lead 300 as shown in FIG. 4. However, the present disclosure is not limited thereto, and the gas discharge guiding unit 450 may have various shapes such as a circular shape as shown in (a) of FIG. 6, an elliptical shape as shown in (b) FIG. 6, and other linear or curved shapes.

As another example, the gas discharge guiding unit 450 may include a first gas discharge guiding unit 450a along the protruding direction of the electrode lead 300 and a second gas discharge guiding unit 450b extending in a direction perpendicular to the protruding direction of the electrode lead 300 as shown in (c) FIG. 6. In particular, the first gas discharge guiding unit 450a and the second gas discharge guiding unit 450b may be connected to each other. Here, the second gas discharge guiding unit 450b may be located at the outside of the sealing portion 250 and the inside of the lead film 400 based on the sealing portion 250 as shown in (c) of FIG. 6, or may be located at the inside of the sealing portion 250 and the outside of the lead film 400 based on the sealing portion 250 as shown in (d) of FIG. 6. Alternatively, the second gas discharge guiding unit 450b may be located both at the outside of the lead film 400 and at the inside of the lead film 400 with respect to the sealing portion 250 as shown in (e) of FIG. 6. However, the shape of the gas discharge guiding unit 450 is not limited to the above, and the gas discharge guiding unit 450 may be inserted into the lead film 400 in an appropriate shape. Accordingly, by adjusting the shape of the gas discharge guiding unit 450 inserted in the lead film 400, it is possible to control the gas discharge performance of the gas discharge guiding unit 450 and the durability and airtightness of the lead film 400. In addition, if necessary, by changing the shape of the gas discharge guiding unit 450, it is possible to simplify the manufacturing process and reduce the cost.

For example, only one gas discharge guiding unit 450 may be included in the lead film 400 as shown in FIG. 4. As another example, a plurality of gas discharge guiding units 450 may be inserted into the lead film 400 and be positioned to be spaced apart from each other.

Accordingly, it is possible to control the gas discharge performance of the gas discharge guiding unit 450 and the durability and airtightness of the lead film 400 by adjusting the number of gas discharge guiding units 450 inserted in the lead film 400. In addition, if necessary, by minimizing the number of gas discharge guiding units 450, it is possible to simplify the manufacturing process and reduce the cost.

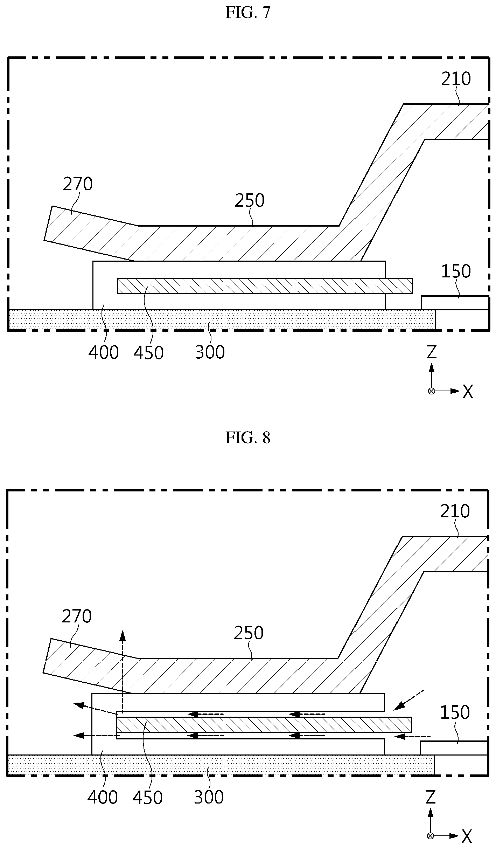

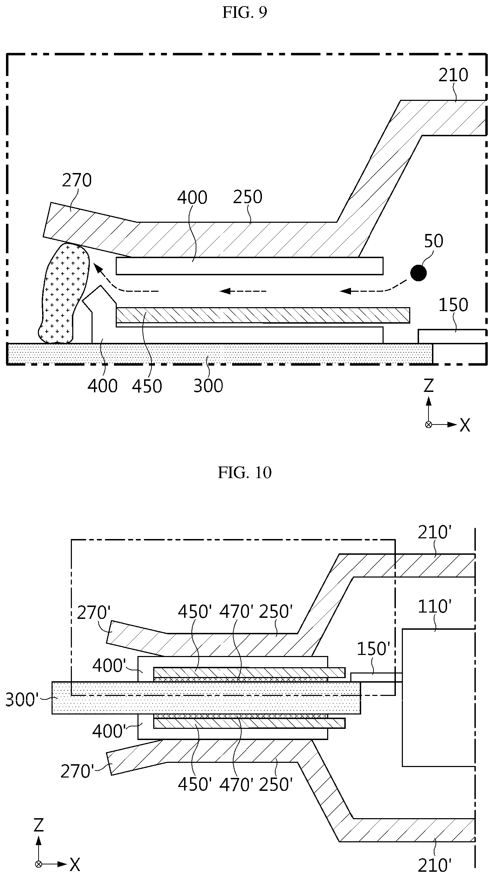

FIG. 7 is an enlarged view showing a two-dot chain line region of FIG. 5. FIG. 8 is a diagram showing a gas discharge path formed at an interface between a lead film and the gas discharge guiding unit of FIG. 7. FIG. 9 is a diagram showing that an electrolyte leaks due to a crack generated in a part of the gas discharge path of FIG. 8.

Referring to FIGS. 7 and 8, in this embodiment, a gas discharge path may be formed at the interface between the gas discharge guiding unit 450 and the lead film 400. More specifically, as shown in FIGS. 7 and 8, the gas discharge path may mean a space in which at least a part of the interface between the gas discharge guiding unit 450 and the lead film 400 are spaced apart by the pressure of the gas generated in the battery case 200. In FIG. 8, the movement path of the gas is indicated by a dotted arrow. That is, as shown in the dotted arrow direction of FIG. 8, the gas discharge path may mean a path through which gas is introduced into the space at the interface between the gas discharge guiding unit 450 and the lead film 400 or discharged to the outside.

Here, the adhesive force between the gas discharge guiding unit 450 and the lead film 400 may be smaller than the adhesive force between the lead film 400 and the electrode lead 300 or the adhesive force between the lead film 400 and the sealing portion 250. More specifically, when the pressure inside the battery case 200 is increased by the gas generated in the battery cell 100, the adhesive force of the interface between the gas discharge guiding unit 450 and the lead film 400 is relatively lower than the adhesive force between the lead film 400 and other components, so at least a part of the interface between the gas discharge guiding unit 450 and the lead film 400 may be spaced apart by the pressure of the gas generated in the battery cell 100 as shown in FIG. 8.

That is, in this embodiment, as the gas discharge guiding unit 450 and the lead film 400 are spaced apart due to the relatively low adhesive force between the gas discharge guiding unit 450 and the lead film 400, the gas inside the battery cell 100 may be introduced into the gas discharge passage formed at the interface between the gas discharge guiding unit 450 and the lead film 400, and the gas may move along the gas discharge passage and be finally discharged through the lead film 400. The gas introduced into the gas discharge passage may be discharged to the outside according to the pressure difference with the outside.

However, the gas discharge path may include not only the case where both the interface between the upper surface of the gas discharge guiding unit 450 and the lead film 400 and the interface between the lower surface of the gas discharge guiding unit 450 and the lead film 400 are spaced apart as shown in FIG. 8, but also the case where the interface between the upper surface of the gas discharge guiding unit 450 and the lead film 400 or the interface between the lower surface of the gas discharge guiding unit 450 and the lead film 400 is spaced apart.

For example, the gas discharge guiding unit 450 may be a film layer made of at least one of polyimide (PI) and polyethylene terephthalate (PET). As another example, the gas discharge guiding unit 450 may be a coating layer made of liquid resin. However, the shape of the gas discharge guiding unit 450 or the material constituting the same is not limited thereto, and any shape or material that can be included in this embodiment as long as the adhesive force of the interface between the gas discharge guiding unit 450 and the lead film 400 can be relatively lowered than the adhesive force between the lead film 400 and other components.

Accordingly, since the battery cell according to this embodiment may form a gas discharge path at the interface between the gas discharge guiding unit 450 and the lead film 400 through a relatively low adhesive force between the gas discharge guiding unit 450 and the lead film 400, it is possible to effectively discharge the gas in the battery cell 100 to the outside while the manufacturing process is relatively easy.

Also, referring to FIGS. 4 and 5 again, one end of the gas discharge guiding unit 450 may be located inner than the inner surface of the sealing portion 250 based on the protruding direction of the electrode lead 300. In this specification, the inner surface of the sealing portion 250 means the end of the sealing portion 250 adjacent to the inside of the battery case 200, and one end of the gas discharge guiding unit 450 located inner than the inner surface of the sealing portion 250 means that one end of the gas discharge guiding unit 450 is located inner than the inner surface of the sealing portion 250 toward the inside of the battery case 200. When one end of the gas discharge guiding unit 450 is located inner than the inner surface of the sealing portion 250, it is not interfered with the sealing portion 250, so gas may be more easily introduced into the gas discharge guiding unit 450.

In addition, based on the protruding direction of the electrode lead 300, the other end of the gas discharge guiding unit 450 may be located outer than the outer surface of the sealing portion 250. In this specification, the outer surface of the sealing portion 250 means the end of the sealing portion 250 adjacent to the outside of the battery case 200, and the other end of the gas discharge guiding unit 450 located outer than the outer surface of the sealing portion 250 means that the other end of the gas discharge guiding unit 450 is located outer than the outer surface of the sealing portion 250 toward the outside of the battery case 200. For example, an interval P is placed between the outer surface of the sealing portion 250 and the other end of the gas discharge guiding unit 450. If the other end of the gas discharge guiding unit 450 is located outer than the outer surface of the sealing portion 250 as described above, the gas introduced into the gas discharge guiding unit 450 may be more easily discharged to the outside. For example, since the other end of the gas discharge guiding unit 450 is not interfered with the sealing portion 250, the gas introduced into the gas discharge guiding unit 450 may be more easily discharged to the outside.

Accordingly, the gas generated inside the battery cell 100 may be discharged toward the gas discharge guiding unit 450, and the gas introduced into the gas discharge guiding unit 450 may be easily discharged to the outside as shown in FIG. 8. In addition, the amount of gas generated inside the battery cell 100 and discharged to the outside may also be increased. In this way, the gas generated inside the battery case 200 may be easily discharged into the gas discharge guiding unit 450 and may be more easily discharged to the outside of the gas discharge guiding unit 450.

Moreover, as shown in FIG. 8, the gas introduced into the gas discharge guiding unit 450 may be particularly easily discharged along the Z-axis direction through the lead film 400 on the gas discharge guiding unit 450. For example, when the other end of the gas discharge guiding unit 450 is located outer than the outer surface of the sealing portion 250, the gas introduced into the gas discharge guiding unit 450 may be discharged along the Z-axis direction in the portion of the lead film 400 between the other end of the gas discharge guiding unit 450 and the outer surface of the sealing portion 250. As mentioned above, the thickness H of the lead film 400 on the upper surface of the gas discharge guiding unit 450 may be 100 µm to 300 µm, and based on the protruding direction of the electrode lead 300, the width W of the lead film 400 surrounding the front surface of the gas discharge guiding unit 450 may be 2 mm or more, or 2 mm to 3 mm. As described above, when the other end of the gas discharge guiding unit 450 is located outer than the outer surface of the sealing portion 250, the gas may be discharged through a portion placed in the Z-axis direction, which is a relatively thin portion of the lead film 400. Therefore, the gas may be discharged more easily. Moreover, if the gas discharge path is completely blocked by the sealing portion 250 when gas discharge occurs, the gas is not smoothly discharged. Thus, the interval P is placed between the outer surface of the sealing portion 250 and the other end of the gas discharge guiding unit 450 as described above, so that the gas may be smoothly discharged.

Referring to FIG. 9, in this embodiment, in the gas discharge path formed at the interface between the gas discharge guiding unit 450 and the lead film 400, a crack may be formed in a part of the lead film 400 when a predetermined time elapses. More specifically, when the gas inside the battery cell 100 is continuously introduced into and discharged from the gas discharge path, the end portion of the lead film 400 adjacent to the outer side of the battery case 200 may become structurally weak. Even if the width W of the lead film 400 covering the entire surface of the gas discharge guiding unit 450 is 2 mm or more to prevent tearing of the lead film 400, a crack may be formed in the lead film as the battery cell 100 continues to be used. In this case, the electrolyte 50 inside the battery cell 100 may be leaked to the outside through the crack.

Here, referring to FIGS. 7 to 9, in the battery cell 100 according to this embodiment, the cover portion 270 may be located outer than the end of the lead film 400, and the end of the cover portion 270 may be located outer than the end of the gas discharge path. Accordingly, in this embodiment, even if a crack occurs to leak the electrolyte 50, the electrolyte leaking to the outside of the gas discharge path may not come into contact with the end surface of the end of the cover portion 270.

As shown in FIG. 9, even if the electrolyte 50 leaks through the crack, the leaked electrolyte is located on the inner resin layer of the cover portion 270, and it is difficult for the leaked electrolyte to reach the barrier metal layer exposed on the end surface of the end of the cover portion 270. That is, since the barrier metal layer exposed on the end surface of the end of the cover portion 270 may not come into contact with the electrolyte leaking to the outside of the gas discharge path, it is possible to prevent an electric circuit from being formed between the barrier metal layer and the electrolyte, and the insulating performance and safety may also be improved accordingly.

In addition, the gas discharge guiding unit 450 may further include a material having a function of absorbing or adsorbing moisture introduced from the outside or hydrofluoric acid generated therein. More specifically, the gas discharge guiding unit 450 may further include a getter material. Here, the getter material may refer to a material capable of evacuating using the action of gas adsorbed to a chemically activated metal film. For example, the getter material may include at least one of calcium oxide (CaO), lithium chloride (LiCl), silica (SiO₂), barium oxide (BaO), barium (Ba), and calcium (Ca). As another example, the getter material may have a structure of a metal organic framework (MOF). However, the getter material is not limited thereto, and all kinds of materials generally classified as getter materials may be included.

Accordingly, in this embodiment, since the gas discharge guiding unit 450 further includes a material capable of absorbing or adsorbing moisture or hydrofluoric acid, the gas discharge guiding unit 450 may minimize the penetration degree of moisture or hydrofluoric acid introduced into the battery cell 100 from the outside of the battery cell 100 more easily, and may more easily discharge the gas generated inside the battery cell 100 to the outside.

In an embodiment of the present disclosure, the gas permeability of the gas discharge guiding unit 450 may be greater than or equal to 40 Barrer at 60°C. For example, the carbon dioxide permeability of the gas discharge guiding unit 450 may satisfy the above range.

For example, the gas discharge guiding unit 450 may include at least one of a polyolefin-based material, a fluorine-based material, and a porous ceramic-based material that satisfies the above gas permeability value. The polyolefin-based material may include at least one material selected from the group consisting of polypropylene, polyethylene, and polyvinyl difluoride (PVDF). The fluorine-based material may include at least one material selected from the group consisting of polytetrafluoroethylene and polyvinylidene fluoride.

In one embodiment of the present disclosure, the gas permeability of the lead film 400 may be 20 Barrer to 60 Barrer, or 30 Barrer to 40 Barrer at 60°C. For example, the carbon dioxide permeability of the lead film 400 may satisfy the above range. In addition, the gas permeability may satisfy the above range at 60°C based on the thickness H of the lead film 400 of 200 µm. If the gas permeability of the lead film 400 satisfies the above range, the gas generated inside the battery cell may be more effectively discharged.

In this specification, the gas permeability may be measured by ASTM F2476-20.

In one embodiment of the present disclosure, the moisture penetration amount of the lead film 400 may be 0.02 g to 0.2 g, or 0.02 g to 0.04 g, or 0.06 g, or 0.15 g for 10 years at 25°C, 50 %RH. If the moisture penetration amount of the lead film 400 satisfies the above range, the penetration of moisture from the lead film 400 may be more effectively prevented.

In an embodiment of the present disclosure, the lead film 400 may have a gas permeability of 20 Barrer to 60 Barrer at 60°C and a moisture penetration amount of 0.02 g to 0.2 g at 25°C, 50%RH for 10 years. When the gas permeability and moisture penetration amount of the lead film 400 satisfy the above ranges, it may be more effective to prevent moisture penetration from the outside while discharging the gas generated inside the battery cell 100.

The moisture penetration amount of the lead film 400 may be measured by adopting the ASTM F 1249 method. At this time, the moisture penetration amount may be measured using equipment officially certified by MCOON.

In an embodiment of the present disclosure, the lead film 400 may be formed of an adhesive composition made of at least one of polyolefin-based material, epoxy, and polyvinyl chloride (PVC). The polyolefin-based material may be polyethylene (PE), polypropylene (PP), or the like. For example, the lead film 400 may be polyethylene, polypropylene, or the like, that satisfies the gas permeability and/or moisture penetration amount values described above.

In addition, since the lead film 400 is made of the above-described material, the lead film 400 may maintain the airtightness of the battery cell 100 and prevent leakage of the internal electrolytic solution.

Hereinafter, a battery cell according to another embodiment of the present disclosure will be described. However, the battery cell according to this embodiment may be described mostly in the same way as the battery cell 100 described above, and the gas discharge guiding unit 450 will be described in detail based the part that is different from the battery cell 100.

FIG. 10 is a cross-sectional view showing a battery cell according to another embodiment of the present disclosure, taken along the A-A' axis of FIG. 3.

Referring to FIGS. 4 and 10, in this embodiment, unlike FIG. 5, the gas discharge guiding unit 450' may be located on the electrode lead 300'. More specifically, a separate lead film 400' may not be positioned between the gas discharge guiding unit 450' and the electrode lead 300'. That is, the gas discharge guiding unit 450' may be inserted into of the lead film 400' adjacent to the electrode lead 300', and may be positioned adjacent to the electrode lead 300'. In other words, this embodiment may have a structure in which the lead film 400' surrounds the outer surface of the gas discharge guiding unit 450' after the gas discharge guiding unit 450' is attached or fixed on the electrode lead 300'.

Accordingly, as the gas discharge guiding unit 450' is positioned adjacent to the electrode lead 300', the thickness of the lead film 400' surrounding the gas discharge guiding unit 450' may also be relatively reduced, there is an advantage of reducing the manufacturing cost and simplifying the manufacturing process.

In addition, an adhesive layer 470' may be formed between the gas discharge guiding unit 450' and the electrode lead 300'. Here, the adhesive layer 470' may extend along the interface between the gas discharge guiding unit 450' and the electrode lead 300'. At this time, the adhesive layer 470' may be formed on the entire or part of the interface between the gas discharge guiding unit 450' and the electrode lead 300'.

For example, the adhesive layer 470' may be made of an adhesive tape or an adhesive binder. However, the present disclosure is not limited thereto, and any material having an adhesive performance capable of fixing the gas discharge guiding unit 450' and the electrode lead 300' to each other may be applied without limitation.

Accordingly, the gas discharge guiding unit 450' may be stably fixed to the electrode lead 300' by the adhesive layer 470'. That is, since the adhesive layer 470' having a relatively high adhesive force is formed between the gas discharge guiding unit 450' and the electrode lead 300', it is possible to prevent peeling caused by an increase in the internal pressure of the battery cell 100, and the sealing strength of the battery cell 100 may also be further improved.

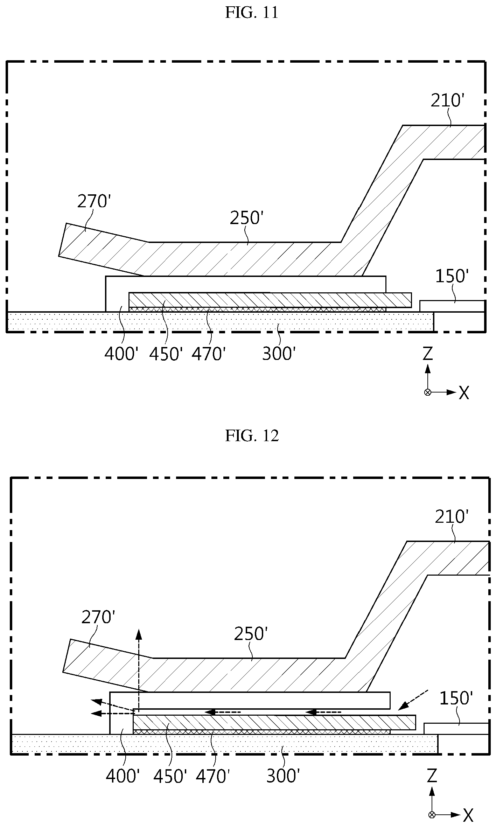

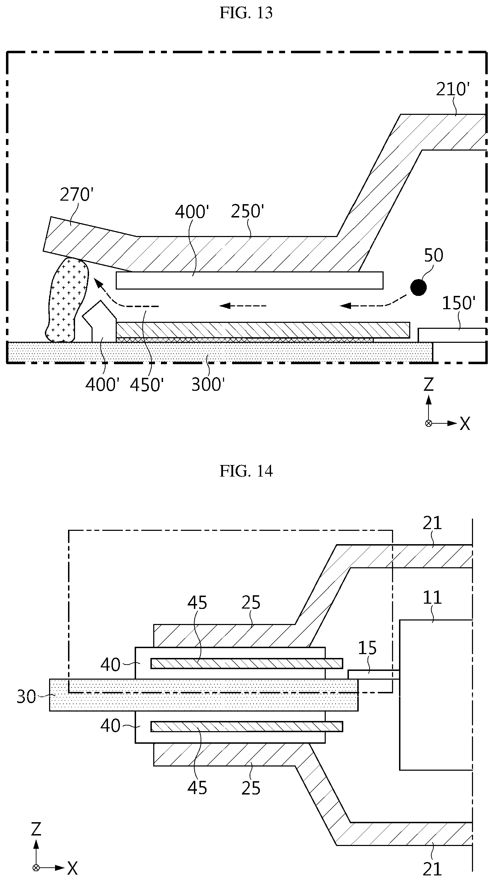

FIG. 11 is an enlarged view showing a two-dot chain line region of FIG. 10. FIG. 12 is a diagram showing a gas discharge path formed at the interface between the lead film and the gas discharge guiding unit of FIG. 11. FIG. 13 is a diagram showing that an electrolyte leaks due to a crack generated in a part of the gas discharge path of FIG. 12.

Referring to FIGS. 11 to 13, in this embodiment, similarly to FIGS. 7 to 9, a gas discharge path may be formed at the interface between the gas discharge guiding unit 450' and the lead film 400'. However, in this embodiment, unlike FIGS. 7 to 10, the gas discharge guiding unit 450' is located adjacent to the electrode lead 300', and an adhesive layer 470' is formed between the gas discharge guiding unit 450' and the electrode lead 300'. Thus, a gas discharge path may not be formed at the interface between the gas discharge guiding unit 450' and the electrode lead 300'. In FIG. 12, the movement path of the gas is indicated by dotted arrows.

More specifically, in this embodiment, the adhesive force between the gas discharge guiding unit 450' and the lead film 400' may be smaller than the adhesive force between the adhesive layer 470' and the gas discharge guiding unit 450' and/or the adhesive force between the adhesive layer 470' and the electrode lead 300'.

More specifically, in this embodiment, when the pressure inside the battery cell 100 increases, the adhesive force of the interface between the gas discharge guiding unit 450' and the lead film 400' is relatively smaller than the adhesive force between the lead film 400' and other components, as shown in FIG. 12, at least a part of the interface between the gas discharge guiding unit 450' and the lead film 400' may be spaced apart by the internal pressure of the battery cell 100.

Moreover, in this embodiment, the adhesive force of the interface between the gas discharge guiding unit 450' and the lead film 400' may be smaller than the adhesive force between the gas discharge guiding unit 450' and the adhesive layer 470' and/or the adhesive force between the adhesive layer 470' and the electrode lead 300'. Thus, it is possible to prevent the interface between the gas discharge guiding unit 450' and the electrode lead 400' from being peeled off when the internal pressure of the battery cell 100 is increased.

That is, in this embodiment, since only the interface between the gas discharge guiding unit 450' and the lead film 400' may be peeled off to form a gas discharge path, it is possible to increase the sealing strength of the battery cell 100 while maintaining the gas discharge performance by the gas discharge path. In addition, according to the high sealing strength, the vent pressure when the gas generated in the battery cell 100 is discharged to the outside may also be higher, and safety may also be further improved.

Moreover, in this embodiment, the gas discharge path may be formed only at the interface between the gas discharge guiding unit 450' and the lead film 400', the gas discharge path may induce the electrolyte 50 inside the battery cell 100 to be discharged toward the cover portion 270 even if a crack occurs as shown in FIG. 13. That is, the insulating performance and safety may also be further improved.

Hereinafter, a battery cell according to a comparative example of the present disclosure will be described in detail. The comparative example will be described in comparison with the embodiments according to FIGS. 3 to 9, but it may also be also described in comparison with the embodiment according to FIGS. 10 to 13.

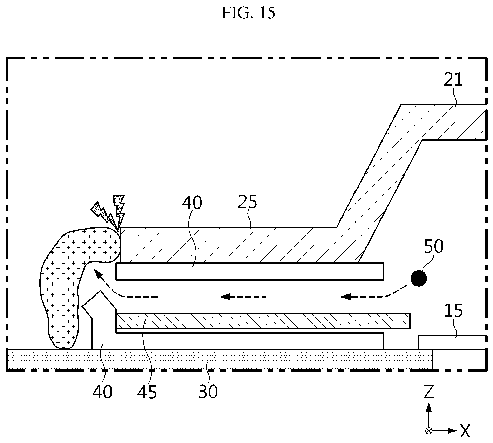

FIG. 14 is a cross-sectional view, taken along the a-a' axis of FIG. 1 according to a comparative example. FIG. 15 is an enlarged view showing the two-dot chain line region of FIG. 14 and showing that an electrolyte leaks due to a crack generated in a part of the gas discharge path of FIG. 14.

Referring to FIGS. 14 and 15, they relate to a battery cell 10 according to a comparative example, and the battery cell 10 of the comparative example is substantially identical to the battery cell of FIGS. 1 and 2, except that a gas discharge guiding unit 45 is included. Hereinafter, the gas discharge guiding unit 45 will be described in detail.

Referring to FIG. 14, the battery cell 10 according to a comparative example includes a sealing portion 25 formed on the lead film 40 where the gas discharge guiding unit 45 is located, and unlike FIGS. 3 to 9, no separate component extending from the end of the sealing portion 25 is included. That is, the end surface of the sealing portion 25 may be exposed to the outside, and in particular, the end surface of the sealing portion 25 may be located on the gas discharge path formed by the lead film 40 and the gas discharge guiding unit 45.

Referring to FIG. 15, even in the battery cell 10 according to the comparative example, a crack may occur in a part of the lead film 40 as a certain time elapses as shown in FIG. 9, and the electrolyte inside the battery cell 10 may be leaked to the outside through the crack.

However, in the battery cell 10 according to the comparative example, since the end surface of the sealing portion 25 is located on the gas discharge path formed by the lead film 40 and the gas discharge guiding unit 45, the end surface of the sealing portion 25 may come into contact with the electrolyte leaked to the outside of the gas discharge path as shown in FIG. 15. That is, since the barrier metal layer exposed on the end surface of the sealing portion 25 may come into contact with the electrolyte leaking to the outside of the gas discharge path, an electric circuit is formed between the barrier metal layer and the electrolyte, and safety may be greatly reduced, for example as a fire occurs.

On the contrary, referring to FIGS. 3 to 9, in the battery cell 100 according to this embodiment, the cover portion 270 is extended from the sealing portion 250 positioned on the gas discharge guiding unit 450, and the end of the cover portion 270 may be located outer than the end of the gas discharge path. That is, unlike the comparative example, in this embodiment, even if a crack occurs in a part of the lead film 400, the electrolyte leaking from the crack may not contact the end of the cover portion 270, so it is possible to prevent an electric circuit from being formed between the end of the cover portion 270 and the electrolyte, and the insulating performance and safety may also be improved accordingly.

A battery module according to another embodiment of the present disclosure includes the battery cell described above. Meanwhile, one or more battery modules according to this embodiment may be packaged in a pack case to form a battery pack.

The battery module described above and the battery pack including the same may be applied to various devices. These devices may be transportation means such as electric bicycles, electric vehicles, hybrid electric vehicles, and the like, but the present disclosure is not limited thereto, and the present disclosure may be applied various devices that can use a battery module and a battery pack including the same, which is also within the scope of the right of the present disclosure.

### Reference Signs

- 100:: battery cell
- 110:: electrode assembly
- 200:: battery case
- 210:: accommodation portion
- 250:: sealing portion
- 270:: cover portion
- 300:: electrode lead
- 400:: lead film
- 450:: gas discharge guiding unit

## Claims

1. A battery cell (100), comprising:
a battery case (200) having an accommodation portion (210) in which an electrode assembly (110) is mounted, and a sealing portion (250) formed by sealing an outer periphery thereof;
an electrode lead (300) electrically connected to an electrode tab (150) included in the electrode assembly (110) and protruding out of the battery case (200) via the sealing portion (250); and
a lead film (400) located at a portion corresponding to the sealing portion (250) in at least one of an upper portion and a lower portion of the electrode lead (300),
**characterized in that** a gas discharge guiding unit (450) is inserted in the lead film (400),
the battery case (200) includes a cover portion (270) extending from the sealing portion (250), and
the cover portion (270) is located on the lead film (400) and protrudes in an outer direction of the battery case (200).

2. The battery cell (100) according to claim 1,
wherein the cover portion (270) is located on the gas discharge guiding unit (450).

3. The battery cell (100) according to claim 2,
wherein based on a direction perpendicular to the protruding direction of the electrode lead (300), a length of the cover portion (270) is equal to or greater than a length of the gas discharge guiding unit (450).

4. The battery cell (100) according to claim 3,
wherein based on the direction perpendicular to the protruding direction of the electrode lead (300), the length of the cover portion (270) is equal to or smaller than a length of the lead film (400).

5. The battery cell (100) according to claim 1,
wherein based on the protruding direction of the electrode lead (300), an end of the cover portion (270) is located outer than an end of the lead film (400).

6. The battery cell (100) according to claim 5,
wherein based on the protruding direction of the electrode lead (300), an end of the electrode lead (300) is located outer than the end of the cover portion (270).

7. The battery cell (100) according to claim 5,
wherein the cover portion (270) is bent in a direction away from the lead film (400) based on the sealing portion (250).

8. The battery cell (100) according to claim 1,
wherein the gas discharge guiding unit (450) extends along the protruding direction of the electrode lead (300), and an end of the gas discharge guiding unit (450) adjacent to an outer side of the battery case (200) is surrounded with the lead film (400).

9. The battery cell (100) according to claim 8,
wherein an end of the gas discharge guiding unit (450) adjacent to an inner side of the battery case (200) is exposed inside the battery case (200).

10. The battery cell (100) according to claim 1,
wherein a gas discharge path is formed at an interface between the gas discharge guiding unit (450) and the lead film (400).

11. The battery cell (100) according to claim 10,
wherein an adhesive force between the gas discharge guiding unit (450) and the lead film (400) is smaller than an adhesive force between the lead film (400) and the electrode lead (300) or an adhesive force between the lead film (400) and the sealing portion (250).

12. The battery cell (100) according to claim 11,
wherein the gas discharge guiding unit (450) is a film layer made of at least one of polyimide and polyethylene terephthalate.

13. The battery cell (100) according to claim 11,
wherein the gas discharge guiding unit (450) is a coating layer made of liquid resin.

14. The battery cell (100) according to claim 1,
wherein the gas discharge guiding unit (450) is located on the electrode lead (300), and an adhesive layer (470) is formed between the gas discharge guiding unit (450) and the electrode lead (300).

15. The battery cell (100) according to claim 14,
wherein an adhesive force between the gas discharge guiding unit (450) and the lead film (400) is smaller than at least one of an adhesive force between the adhesive layer (470) and the gas discharge guiding unit (450) and an adhesive force between the adhesive layer (470) and the electrode lead (300).

## Patentansprüche

1. Batteriezelle (100), umfassend:
ein Batteriegehäuse (200), welches einen Aufnahmeabschnitt (210), in welchem eine Elektrodenanordnung (110) montiert ist, und einen Dichtungsabschnitt (250) aufweist, welcher durch ein Abdichten eines Außenumfangs davon gebildet ist;
eine Elektrodenleitung (300), welche elektrisch mit einer in der Elektrodenanordnung (110) umfassten Elektrodenlasche (150) verbunden ist und über den Dichtungsabschnitt (250) aus dem Batteriegehäuse (200) vorsteht; und
eine Leitungsfolie (400), welche an einem dem Dichtungsabschnitt (250) entsprechenden Abschnitt in wenigstens einem aus einem oberen Abschnitt und einem unteren Abschnitt der Elektrodenleitung (300) angeordnet ist,
**dadurch gekennzeichnet, dass** eine Gasableitführungseinheit (450) in die Leitungsfolie (400) eingesetzt ist,
das Batteriegehäuse (200) einen Abdeckabschnitt (270) umfasst, welcher sich von dem Dichtungsabschnitt (250) erstreckt, und
der Abdeckabschnitt (270) auf der Leitungsfolie (400) angeordnet ist und in einer äußeren Richtung des Batteriegehäuses (200) vorsteht.

2. Batteriezelle (100) nach Anspruch 1,
wobei der Abdeckabschnitt (270) auf der Gasableitführungseinheit (450) angeordnet ist.

3. Batteriezelle (100) nach Anspruch 2,
wobei, in Bezug auf eine Richtung senkrecht zu der Vorstehrichtung der Elektrodenleitung (300), eine Länge des Abdeckabschnitts (270) gleich wie oder größer als eine Länge der Gasableitführungseinheit (450) ist.

4. Batteriezelle (100) nach Anspruch 3,
wobei, in Bezug auf die Richtung senkrecht zu der Vorstehrichtung der Elektrodenleitung (300), die Länge des Abdeckabschnitts (270) gleich wie oder kleiner als eine Länge der Leitungsfolie (400) ist.

5. Batteriezelle (100) nach Anspruch 1,
wobei, in Bezug auf die Vorstehrichtung der Elektrodenleitung (300), ein Ende des Abdeckabschnitts (270) weiter außen angeordnet ist als ein Ende der Leitungsfolie (400).

6. Batteriezelle (100) nach Anspruch 5,
wobei, in Bezug auf die Vorstehrichtung der Elektrodenleitung (300), ein Ende der Elektrodenleitung (300) weiter außen angeordnet ist als das Ende des Abdeckabschnitts (270).

7. Batteriezelle (100) nach Anspruch 5,
wobei der Abdeckabschnitt (270) in Bezug auf den Dichtungsabschnitt (250) in eine Richtung weg von der Leitungsfolie (400) gebogen ist.

8. Batteriezelle (100) nach Anspruch 1,
wobei sich die Gasableitführungseinheit (450) entlang der Vorstehrichtung der Elektrodenleitung (300) erstreckt und ein an eine Außenseite des Batteriegehäuses (200) angrenzendes Ende der Gasableitführungseinheit (450) von der Leitungsfolie (400) umgeben ist.

9. Batteriezelle (100) nach Anspruch 8,
wobei ein an eine Innenseite des Batteriegehäuses (200) angrenzendes Ende der Gasableitführungseinheit (450) innerhalb des Batteriegehäuses (200) freiliegt.

10. Batteriezelle (100) nach Anspruch 1,
wobei an einer Schnittstelle zwischen der Gasableitführungseinheit (450) und der Leitungsfolie (400) ein Gasableitpfad gebildet ist.

11. Batteriezelle (100) nach Anspruch 10,
wobei eine Haftkraft zwischen der Gasableitführungseinheit (450) und der Leitungsfolie (400) kleiner ist als eine Haftkraft zwischen der Leitungsfolie (400) und der Elektrodenleitung (300) oder eine Haftkraft zwischen der Leitungsfolie (400) und dem Dichtungsabschnitt (250).

12. Batteriezelle (100) nach Anspruch 11,
wobei die Gasableitführungseinheit (450) eine Folienschicht ist, welche aus wenigstens einem aus Polyimid und Polyethylenterephthalat hergestellt ist.

13. Batteriezelle (100) nach Anspruch 11,
wobei die Gasableitführungseinheit (450) eine Beschichtungsschicht ist, welche aus Flüssigharz hergestellt ist.

14. Batteriezelle (100) nach Anspruch 1,
wobei die Gasableitführungseinheit (450) auf der Elektrodenleitung (300) angeordnet ist und zwischen der Gasableitführungseinheit (450) und der Elektrodenleitung (300) eine Haftschicht (470) gebildet ist.

15. Batteriezelle (100) nach Anspruch 14,
wobei eine Haftkraft zwischen der Gasableitführungseinheit (450) und der Leitungsfolie (400) kleiner ist als wenigstens eine aus einer Haftkraft zwischen der Haftschicht (470) und der Gasableitführungseinheit (450) und einer Haftkraft zwischen der Haftschicht (470) und der Elektrodenleitung (300).

## Revendications

1. Élément de batterie (100), comprenant :
un boîtier de batterie (200) ayant une partie de logement (210) dans laquelle est monté un ensemble d'électrodes (110), et une partie de scellement (250) formée par scellement d'une périphérie extérieure de celle-ci ;
une languette d'électrode (300) électriquement connectée à une patte d'électrode (150) incluse dans l'ensemble d'électrodes (110) et faisant saillie hors du boîtier de batterie (200) via la partie de scellement (250) ; et
un film conducteur (400) situé au niveau d'une partie correspondant à la partie de scellement (250) dans au moins une parmi une partie supérieure et une partie inférieure de la languette d'électrode (300),
**caractérisé en ce qu'**une unité de guidage de décharge de gaz (450) est insérée dans le film conducteur (400),
le boîtier de batterie (200) comporte une partie de recouvrement (270) s'étendant à partir de la partie de scellement (250), et
la partie de recouvrement (270) est située sur le film conducteur (400) et fait saillie dans une direction extérieure du boîtier de batterie (200).

2. Élément de batterie (100) selon la revendication 1,
dans lequel la partie de recouvrement (270) est située sur l'unité de guidage de décharge de gaz (450).

3. Élément de batterie (100) selon la revendication 2,
dans lequel, sur la base d'une direction perpendiculaire à la direction de saillie de la languette d'électrode (300), une longueur de la partie de recouvrement (270) est supérieure ou égale à une longueur de l'unité de guidage de décharge de gaz (450).

4. Élément de batterie (100) selon la revendication 3,
dans lequel, sur la base de la direction perpendiculaire à la direction de saillie de la languette d'électrode (300), la longueur de la partie de recouvrement (270) est inférieure ou égale à une longueur du film conducteur (400).

5. Élément de batterie (100) selon la revendication 1,
dans lequel, sur la base de la direction de saillie de la languette d'électrode (300), une extrémité de la partie de recouvrement (270) est située plus à l'extérieur qu'une extrémité du film conducteur (400).

6. Élément de batterie (100) selon la revendication 5,
dans lequel, sur la base de la direction de saillie de la languette d'électrode (300), une extrémité de la languette d'électrode (300) est située plus à l'extérieur que l'extrémité de la partie de recouvrement (270).

7. Élément de batterie (100) selon la revendication 5,
dans lequel la partie de recouvrement (270) est courbée dans une direction s'éloignant du film conducteur (400) sur la base de la partie de scellement (250).

8. Élément de batterie (100) selon la revendication 1,
dans lequel l'unité de guidage de décharge de gaz (450) s'étend le long de la direction de saillie de la languette d'électrode (300), et une extrémité de l'unité de guidage de décharge de gaz (450) adjacente à un côté extérieur du boîtier de batterie (200) est entourée par le film conducteur (400).

9. Élément de batterie (100) selon la revendication 8,
dans lequel une extrémité de l'unité de guidage de décharge de gaz (450) adjacente à un côté intérieur du boîtier de batterie (200) est exposée à l'intérieur du boîtier de batterie (200).

10. Élément de batterie (100) selon la revendication 1,
dans lequel un trajet de décharge de gaz est formé au niveau d'une interface entre l'unité de guidage de décharge de gaz (450) et le film conducteur (400).

11. Élément de batterie (100) selon la revendication 10,
dans lequel une force adhésive entre l'unité de guidage de décharge de gaz (450) et le film conducteur (400) est inférieure à une force adhésive entre le film conducteur (400) et la languette d'électrode (300) ou une force adhésive entre le film conducteur (400) et la partie de scellement (250).

12. Élément de batterie (100) selon la revendication 11,
dans lequel l'unité de guidage de décharge de gaz (450) est une couche de film constituée d'au moins un parmi du polyimide et du polyéthylène téréphtalate.

13. Élément de batterie (100) selon la revendication 11,
dans lequel l'unité de guidage de décharge de gaz (450) est une couche de revêtement constituée de résine liquide.

14. Élément de batterie (100) selon la revendication 1,
dans lequel l'unité de guidage de décharge de gaz (450) est située sur la languette d'électrode (300), et une couche adhésive (470) est formée entre l'unité de guidage de décharge de gaz (450) et la languette d'électrode (300).

15. Élément de batterie (100) selon la revendication 14,
dans lequel une force adhésive entre l'unité de guidage de décharge de gaz (450) et le film conducteur (400) est inférieure à au moins une parmi une force adhésive entre la couche adhésive (470) et l'unité de guidage de décharge de gaz (450) et une force adhésive entre la couche adhésive (470) et la languette d'électrode (300).
